# EUROPEAN PATENT APPLICATION

(11) **EP 1 920 974 A1**
(43) Date of publication of application: **14.05.2008**
(21) Application number: 06023411.9
(22) Date of filing: 10.11.2006
(51) Int. Cl.: B60R 9/045

(54) **Spoiler for a motor vehicle**

(71) Applicant: GM Global Technology Operations, Inc., Detroit, MI 48265-3000 (US)
(72) Inventor: Petersson, Leif, 23442 Lomma (SE)
(74) Representative: Daniel, Ulrich W.P.

(57) **Abstract**

The invention relates to a spoiler (1) for a motor vehicle (2) adapted to carry oblong objects, the spoiler having a wing (5) comprising two roof bars (3,4), each roof bar having two supporting legs (8), the roof bars being moveable with respect to each other, whereby the bottom surface (14) of a roof bar is movably connected to a top surface (12) of a supporting leg associated with said roof bar.

Furthermore, the invention relates to a motor vehicle (2) comprising such a spoiler (1).

## Description

The invention relates to a spoiler for a motor vehicle being adapted to carry oblong objects such as skis, mattresses and the like on top of said motor vehicle. Furthermore, it relates to a motor vehicle, in particular to a van or minivan, comprising such a spoiler.

A spoiler serves to aerodynamically influence the airflow surrounding of a vehicle. Rear roof spoilers are positioned relatively close to the rear edge of the roof of said vehicle. Rear roof spoiler are disclosed in US 2006/0043770 A1.

DE 199 33 435 A1 describes a rear roof spoiler which forms part of the structure of a carrier. The carrier is fastened to the rear window or rear door of a passenger car and is suitable for carrying bicycles.

Roof racks for passenger cars are generally known. A commercially available passenger car, namely the model "Espace" sold by Renault Nissan Deutschland AG, has a roof rack being composed of two roof bars, each roof bar having two supporting legs by which it is fastened to the roof. Each roof bar is telescopically connected to its associated supporting leg. At least one of the two roof bars can be moved along tracks embedded in the roof. The tracks follow the longitudinal axis of the car. If separated from each other, the two roof bars act as a roof rack for carrying oblong objects such as bulky suitcases, skis etc. When the roof bars are adjacent to each other they are positioned close to the rear end of the roof and act as a spoiler, namely as a rear roof spoiler.

It is an object of an embodiment of the invention to provide an improved spoiler of the type being described in the last paragraph which slides more easily along non-parallel tracks.

This object is solved by the features of the independent claims. Further embodiments are described by the sub-claims.

A first embodiment of the invention refers to a spoiler for a motor vehicle adapted to carry oblong objects. The spoiler has a wing comprising two roof bars, whereby each roof bar has two supporting legs. The roof bars are moveable with respect to each other. The bottom surface of a roof bar is movably connected to a top surface of a supporting leg associated with said roof bar.

The spoiler has two oblong roof bars being aligned crosswise to the longitudinal axis of the motor vehicle, their length corresponding roughly to the width of the motor vehicle. Each roof bar is fastened to the roof of the motor vehicle by means of two supporting legs, e.g. clamping devices. The supporting legs connect the roof bars with tracks, whereby the tracks follow the longitudinal axis on both sides of the motor vehicle. The tracks may be either embedded into the roof structure or may protrude from the roof. In both cases they may serve as rails along which the supporting legs of at least one of the roof bars may be able to roll or slide.

The spoiler comprises two roof bars. In a first configuration the roof bars are adjacent to each other and form a wing, whereby the wing is located in the rear portion of the roof. The wing acts as a spoiler. In this configuration the wing does not need to be located exactly at the rear edge of the roof. Instead, the spoiler may have a certain distance to this edge. However, even in this configuration the spoiler according to this embodiment may be called a rear roof spoiler as it serves to aerodynamically influence the airflow in the vicinity of said roof edge.

In a second configuration, the roof bars are separated from each other. In this case the roof bars serve as a roof rack, whereby the distance of the roof bars is determined by the length of the goods to be carried.

To transfer the roof bars from the first configuration into the second configuration or vice versa the supporting legs of at least one of the roof bars is moved along tracks which follow the longitudinal axis on both sides of the motor vehicle. As a motor vehicle has in most cases two tracks not being exactly parallel to each other, the distance of the supporting legs with respect to each other needs to change when the roof bar is moved along the tracks. As a consequence the roof bar needs to expand or contract when moved along the longitudinal axis of the motor vehicle. For that purpose the supporting legs are movably connected to the roof bars. This movement is perpendicular to the longitudinal axis of the motor vehicle.

The supporting legs may be slidably connected to the roof bars. In the alternative either the supporting leg comprises at least one roller to enable a longitudinal movement of the roof bar or vice versa. The moveable connection is thus accomplished by a sliding mechanism or a roller mechanism. The two surfaces involved in this movement may be planar in shape.

According to the embodiment the bottom surface of a roof bar is moveably connected to a top surface of a supporting leg associated with said roof bar. In this case the roof bar moves more easily along non-parallel tracks than it is the case when there is a telescopic connection between the supporting leg and the roof bar. Furthermore, the moveable connection just proposed makes it easier to compensate for a more pronounced non-parallelism of the tracks. In other words it allows for a greater expansion and retraction of the roof bar. Even more, the mechanism, e.g. sliding mechanism, is hidden below the wing such that it is not sensitive to dirt, ice or water.

In addition, the proposed mechanism facilitates the design of a spoiler which really looks like a spoiler when not in use as a roof-rack. The underlying reason is that the proposed mechanism is a flat structure which fits better to a flat spoiler. As a consequence, the choice of a flat mechanism, e.g. sliding mechanism, gives more styling freedom for the spoiler and increases the potential for an improved airflow surrounding the motor vehicle because less design compromises have to be accepted.

In a second embodiment the bottom surface of a roof bar has a protruding element, said element being able to engage into an opening in the supporting leg being associated with said roof bar. With this choice the top surface of the supporting leg has the function of carrying the weight whereas the protruding element in combination with the opening has the function of allowing a sliding movement. The two functions are thus spatially decoupled which means that it is sufficient to design the combination protruding element/opening for a low mechanical stress. Furthermore, said mechanism makes it possible to move the roof bars along the tracks in a user-friendly fashion with low friction.

Another embodiment suggests that the top surface of the supporting leg has a protruding element, said element being able to engage into an opening in the roof bar associated with said supporting leg. This is a kinematic reversal of the solution described in last embodiment such that the explanations given there apply mutatis mutandis.

In a further embodiment the bottom surface of the roof bar houses a roller cooperating with a protruding element of the top surface of the supporting leg. In the alternative, the top surface houses a roller cooperating with a protruding element of the bottom surface. The use of at least one roller rolling along the protruding element reduces friction to a minimum.

In a further embodiment the protruding element is a rail. In this case the protruding rail may engage a corresponding opening or may be used by a roller rolling along the rail.

Another aspect of the invention relates to a motor vehicle having a spoiler according to any of the embodiments disclosed above.

Further elements and advantages of the claimed invention will be apparent from the following detailed description with reference to the accompanying drawings. This description should be understood to represent nonlimiting examples of the invention. Furthermore, the use of reference signs in the drawings shall not be understood as limiting the scope of the claimed invention.
- Fig. 1: shows an embodiment of a spoiler,
- fig. 2: shows the spoiler of figure 1 on top of a motor vehicle,
- fig. 3: shows a supporting leg,
- fig. 4: shows a roof bar and a supporting leg,
- fig. 5a: shows a roof bar in the side view,
- fig. 5b: shows a sectional view along line A-A of figure 5a.

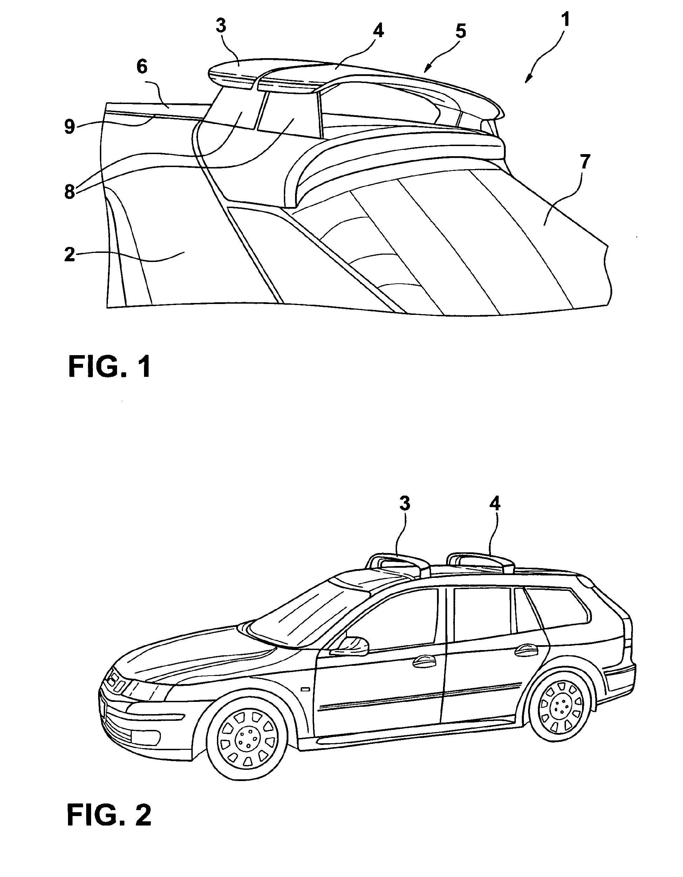

Figure 1 shows in a perspective view a spoiler 1 mounted on top of a motor vehicle 2. Spoiler 1 has two roof bars 3 and 4 forming a central wing 5 on top of the roof 6.

Figure 1 shows the spoiler 1 in a first configuration when the two roof bars 3 and 4 are adjacent to each other. In this case the spoiler 1 is located at the edge of the roof 7 or to the rear window 7 respectively. In this configuration the wing 5 serves to aerodynamically influence the airflow around the motor vehicle 2 and thus serves as a spoiler 1.

Figure 2 shows the spoiler 1 connected to the roof 6 of a motor vehicle 2. In this case the roof bars 3 and 4 are in a second, spaced apart configuration such that the spoiler 1 can be used as a roof rack for carrying oblong objects such as skis.

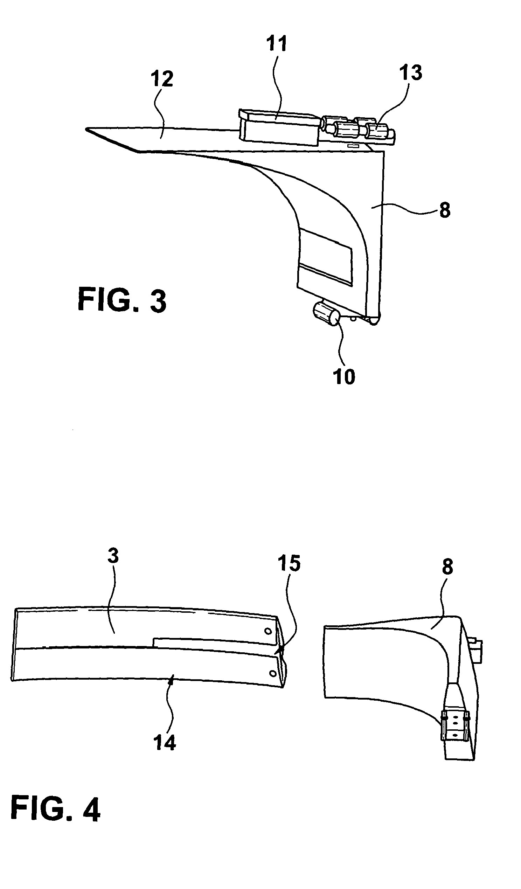

Figure 3 shows a supporting leg 8 for fastening the roof racks 3, 4 to a rail 9 embedded in the roof structure of motor vehicle 2. It has fastening means 10 for connecting it to the rail 9, a protruding element 11 protruding from the top surface 12 of supporting leg 8 and locking means 13 for locking the position of the supporting leg relative to the roof bar.

Figure 4 shows the bottom surface 14 of roof bar having a protruding element.

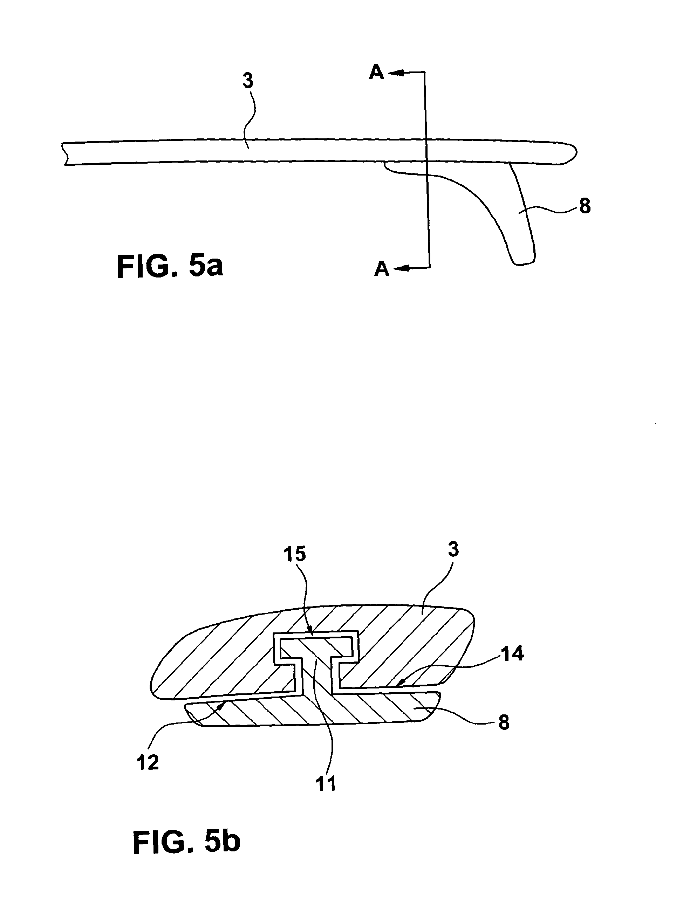

Figure 5a shows a roof bar 3 with its supporting leg 8 and figure 5b a corresponding sectional view A-A when looking in the direction of the arrows of figure 5a. The supporting leg 8 has a protruding element 11 engaging into opening 16 of roof bar 3. As a matter of fact it is also possible, that the opening 15 belongs to the roof bar 3 and the protruding element 11 to supporting leg 8.

Although particular embodiments of the invention have been described, it should be understood that these are not intended to limit the invention to the particular from disclosed, but, on the contrary, the invention covers all modifications, embodiments, equivalents and alternatives falling within the scope of the claimed invention.

### List of reference numerals

- 01: spoiler
- 02: motor vehicle
- 03: roof bar
- 04: roof bar
- 05: wing
- 06: roof
- 07: rear window
- 08: supporting leg
- 09: rail
- 10: fastening means
- 11: protruding element
- 12: top surface
- 13: locking means
- 14: bottom surface
- 15: opening

## Claims

1. Spoiler (1) for a motor vehicle (2) adapted to carry oblong objects, the spoiler having a wing (5) comprising two roof bars (3,4), each roof bar having two supporting legs (8), the roof bars being moveable with respect to each other, whereby the bottom surface (14) of a roof bar is movably connected to a top surface (12) of a supporting leg associated with said roof bar.

2. Spoiler according to claim 1, whereby the bottom surface has a protruding element (11), said element being able to engage into an opening (16) in the supporting leg being associated with said roof bar.

3. Spoiler according to any of the preceding claims, whereby the top surface has a protruding element (11), said element being able to engage into an opening (15) in the roof bar associated with said supporting leg.

4. Spoiler according to any of the preceding claims, whereby the bottom surface houses has a roller cooperating with a protruding element of the top surface or vice versa.

5. Spoiler according to any of the preceding claims, whereby the protruding element is a rail.

6. Motor vehicle (2) comprising a spoiler (1) according to any of the preceding claims.

## Amended claims

### Amended claims in accordance with Rule 137(2) EPC.

**1.** Spoiler (1) for a motor vehicle (2) adapted to carry oblong objects, the spoiler having a wing (5) comprising two roof bars (3,4), each roof bar having two supporting legs (8), the roof bars being moveable with respect to each other, whereby the bottom surface (14) of a roof bar is movably connected to a top surface (12) of a supporting leg associated with said roof bar.

**2.** Spoiler according to claim 1, whereby the bottom surface has a protruding element (11), said element being able to engage into an opening (16) in the supporting leg being associated with said roof bar.

**3.** Spoiler according to any of the preceding claims, whereby the top surface has a protruding element (11), said element being able to engage into an opening (15) in the roof bar associated with said supporting leg.

**4.** Spoiler according to any of the preceding claims, whereby the bottom surface houses a roller cooperating with a protruding element of the top surface or vice versa.

**5.** Spoiler according to any of the preceding claims, whereby the protruding element is a rail.

**6.** Motor vehicle (2) comprising a spoiler (1) according to any of the preceding claims.
